Europäisches Patentamt

European Patent Office

Office européen des brevets

(19)

(11) Veröffentlichungsnummer: **0 007 124**
**B1**

# EUROPÄISCHE PATENTSCHRIFT

(12)

(45) Veröffentlichungstag der Patentschrift:
26.05.82

(21) Anmeldenummer: 79200335.2

(22) Anmeldetag: 23.06.79

(51) Int. Cl.³: **C 22 C 19/05** // B23K35/30

(54) Nickel-Basis-Legierung.

(30) Priorität: 06.07.78 DE 2829702

(43) Veröffentlichungstag der Anmeldung:
23.01.80 Patentblatt 80/2

(45) Bekanntmachung des Hinweises auf die Patenterteilung:
26.05.82 Patentblatt 82/21

(84) Benannte Vertragsstaaten:
AT BE CH DE FR GB IT LU NL SE

(56) Entgegenhaltungen:
AT-B-287 432
DE-A1-2 639 325
DE-A1-2 446 517
DE-B-1 185 034
DE-B-1 198 169
DE-B-1 483 187
DE-B-1 558 873
FR-A-1 376 914
US-A-2 744 009
US-A-2 868 639

(73) Patentinhaber: METALLGESELLSCHAFT AG,
Reuterweg 14 Postfach 3724, D-6000 Frankfurt/M.1 (DE)

(72) Erfinder: Kruske, Gerhard, Ing. grad., Mauerweg 28,
D-6370 Oberursel 5 (DE)
Erfinder: Knotek, Otto, Prof. Dr., Dipl.-Ing., Melatener
Strasse 87a, D-5100 Aachen (DE)
Erfinder: Lugscheider, Erich, Prof. Dr., Dipl.-Ing.,
Kolmondstraat 46, Vaals (NL)

(74) Vertreter: Fischer, Ernst, Dr., Reuterweg 14,
D-6000 Frankfurt am Main 1 (DE)

## Nickel-Basis-Legierung

Die Erfindung betrifft eine Nickel-Basis-Legierung mit Beständigkeit gegen interkristalline Korrosion, Abrasion, Erosion, Kavitation, zyklische Temperaturwechsel und mit hoher Warmhärte gemäss DE-Al-26 39 325, bestehend aus

0,5 bis 5 Gew.% Kohlenstoff
2 bis 15 Gew.% Wolfram
25 bis 55 Gew.% Chrom
0,5 bis 3,5 Gew.% Bor
1 bis 5 Gew.% Silizium
1 bis 5 Gew.% Eisen
Rest Nickel,

wobei die Randbedingungen

$$\text{Gew.% } C = \text{Gew.% } C_1 + \text{Gew.% } C_2 + 0{,}2$$
$$\text{Gew.% } W = 36 \times \text{Gew.% } C_1$$
$$\text{Gew.% } Cr \geq 17 + 9 \times \text{Gew.% } C_2 - 4 \times \text{Gew.% } C$$

gelten.

Es bedeuten:

Gew.% $C_1$ = Kohlenstoffanteil der zur Karbidbildung mit refraktären Metallen (Wolfram, Molybdän) erforderlich ist,

Gew.% $C_2$ = Kohlenstoffanteil der zur Chromkarbidbildung erforderlich ist,

0,2 Faktor als Grenzlöslichkeitsäquivalent von C im Nickel-Chrom-Mischkristall.

Vorzugsweise ist

$$\text{Gew.% } Cr \geq 25 + 9 \times \text{Gew.% } C_2 - 4 \times \text{Gew.% } C$$

In praktisch allen Industriebereichen werden im Zusammenhang mit Verschleiss- und Korrosionsproblemen bei hochbeanspruchten Bauteilen rohstoffsparende Lösungen durch Beschichtung mit Hartlegierungen angestrebt. Vor allem im Maschinen-, Apparate- und Armaturenbau werden Hart-Legierungen auf Kobalt- und Nickelbasis seit Jahrzehnten mit Erfolg verwendet.

Im Bereich der Kerntechnik ist der Einsatz von Kobaltlegierungen, sogenannten Stelliten, durch die Anwesenheit von Kobalt begrenzt. Es wurde daher in jüngster Zeit versucht, Stellite durch die darüber hinaus einfacher verarbeitbaren Nickel-Chrom-Bor-Silizium-Hartlegierungen zu ersetzen. Es zeigte sich jedoch, dass boridisch-silizidische Nickelhartlegierungen die Anforderungen hinsichtlich Korrosionsbeständigkeit, insbesondere gegen interkristalline Korrosion, nicht erfüllen. Darüber hinaus werden Nickel-Chrom-Bor-Silizium-Legierungen häufig auch den Anforderungen bezüglich Warmhärte und Rissanfälligkeit nicht gerecht. Aufgrund dieser Problematik wurde u. a. ein neuer Hartlegierungstyp auf Nickelbasis gemäss DE-Al-26 39 325 entwickelt.

Diese Auftraglegierungen sind aufgrund des charakteristischen Hartstoffanteils als carbidische Nickelhartlegierungen zu bezeichnen. Durch gezielte Abstimmung des Kohlenstoffanteils mit dem vergleichsweise hohen Chrom- und Wolframgehalt sowie Zusätzen an Bor, Silizium und Eisen gelingt die Herstellung hochkorrosionsbeständiger Hartlegierungen im Härtebereich von 35 bis 50 HRC.

Die neuen Hartlegierungen zeigen das für Hartlegierungen charakteristische Gefüge, d. h. in einer vergleichsweise duktilen Metallmatrix sind die für die Verschleissfestigkeit verantwortlichen Hartstoffphasen gleichmässig verteilt eingelagert. Entsprechend den Legierungsbestandteilen und deren gegenseitiger Löslichkeit im festen Zustand besteht die Metallmatrix aus einem Chrom, Wolfram, Silizium, Kohlenstoff und Eisen enthaltenden Nickelmischkristall. Als dominante Hartstoffe tritt das Komplexcarbid $M_7C_3$ auf, wobei M für die Metalle Chrom, Nickel und Wolfram steht. Als weitere Hartphase treten infolge der äusserst geringen Löslichkeit von Bor im Matrixmischkristall Chromboride meist vom Typ CrB auf. Je nach Abstimmung der Legierungselemente innerhalb der angegebenen Toleranzbereiche und den Abkühlbedingungen bei der Legierungsherstellung bzw. Verarbeitung können gegebenenfalls weitere Hartphasen in kleinen Mengen stabilisiert werden. Es sind dies Komplexcarbide der Art $M_{23}C_6$ und $M_2C$ sowie ein siliziumstabilisiertes Carbid vom Typ $M_6C$.

Die neuen Legierungen bieten für den Verschleissschutz bei höheren Temperaturen Vorteile, da mit Legierungen vergleichbarer niedrigerer Raumtemperaturhärte gearbeitet werden kann, wodurch sich Verarbeitungs- und Bearbeitungsvorteile ergeben.

Neben der hohen Festigkeit bei Raumtemperatur wird mit der Legierung vor allem das ausgezeichnete Hochtemperaturfestigkeitsverhalten mit nahezu konstanter Festigkeit im Temperaturbereich von 300 bis 600° C erzielt.

Das thermische Ausdehnungsverhalten der neuen Nickelhartlegierungen ist ebenso wie die Dichte vergleichbar mit entsprechenden konventionellen Hartlegierungen auf Nickel- bzw. Kobaltbasis.

Neben den guten mechanischen Eigenschaften besitzen carbidische Nickelhartlegierungen auch günstiges Schmelzverhalten. Der Schmelztemperaturbereich von etwa 1170 bis 1230° C liegt unter dem vergleichbarer Kobalthartlegierungen, wodurch eine ausgezeichnete Verarbeitbarkeit gegeben ist.

Die neuen Hartlegierungen schliessen infolge ihrer ausgezeichneten Korrosionsbeständigkeit eine bestehende Lücke innerhalb der besonders gegen oxidierende Medien äusserst schlecht beständigen konventionellen Nickelhartlegierungen.

In dem Bestreben, die mechanisch-technologischen Eigenschaften der eingangs genannten Nikkel-Basis-Legierung weiter zu verbessern, wurde gefunden, dass durch den Zusatz von 0,5 bis 4,5 Gew.%, vorzugsweise 1 bis 3 Gew.%, Phosphor der Schmelztemperaturbereich weiter abgesenkt werden kann, wodurch sich eine noch bessere Verarbeitbarkeit ergibt, die insbesondere darin zu sehen ist, dass die in dem Schmelztemperaturbereich liegenden Temperaturwerte durch Zugabe von in dem angegebenen Legierungsbereich lie-

2

gender bestimmter Phosphormengen relativ gut steuerbar sind.

Der Phosphorgehalt trägt ferner dazu bei, dass die Oxide auf der zu beschichtenden Oberfläche abgebaut werden und somit auch von daher eine verbesserte Verarbeitbarkeit gegeben ist. Ebenso wird infolge des Phosphorgehalts eine Aufmischung mit dem Grundwerkstoff beim Schweissen vermieden, so dass die Schweissnaht eine hohe Reinheit besitzt und damit die Gefahr der Korrosion beseitigt ist.

Gegenüber der Legierung nach DE-AI-26 39 325 werden mit der erfindungsgemäss zusammengesetzten Legierung, wie anhand einer Legierung der Zusammensetzung

1,2 Gew.% Kohlenstoff
31,5 Gew.% Chrom
2,0 Gew.% Silizium
0,6 Gew.% Bor
7,8 Gew.% Wolfram
2,0 Gew.% Eisen
2,0 Gew.% Phosphor
Rest Nickel

nachgewiesen werden konnte, ein verbessertes Fliessverhalten und eine verbesserte Duktilität erreicht, die eine wesentlich verbesserte Verarbeitbarkeit der Legierung bewirken.

## Patentansprüche

1. Nickel-Basis-Legierung mit Beständigkeit gegen interkristalline Korrosion, Abrasion, Erosion, Kavitation, zyklische Temperaturwechsel und mit hoher Warmhärte gemäss DE-AI-26 39 325, bestehend aus

0,5 bis 5 Gew.% Kohlenstoff
2 bis 15 Gew.% Wolfram
25 bis 55 Gew.% Chrom
0,5 bis 3,5 Gew.% Bor
1 bis 5 Gew.% Silizium
1 bis 5 Gew.% Eisen
Rest Nickel,

wobei die Randbedingungen

Gew.% C = Gew.% $C_1$ + Gew.% $C_2$ + 0,2
Gew.% W = 36 × Gew.% $C_1$
Gew.% Cr ≥ 17+9×Gew.% $C_2$−4×Gew.% C

gelten, dadurch abgewandelt, dass die Legierung zusätzlich 0,5 bis 4,5 Gew.% Phosphor, bezogen auf die Summe aller Bestandteile enthält; es bedeuten:

Gew.% $C_1$ = Kohlenstoffanteil der zur Karbidbildung mit refraktären Metallen (Wolfram, Molybdän) erforderlich ist,

Gew.% $C_2$ = Kohlenstoffanteil der zur Chromkarbidbildung erforderlich ist,

0,2 Faktor als Grenzlöslichkeitäquivalent von C im Nickel-Chrom-Mischkristall.

2. Nickel-Basis-Legierung nach Anspruch 1, dadurch gekennzeichnet, dass

Gew.% Cr ≥ 25 + 9 × Gew.% $C_2$ − 4 × Gew.% C ist.

3. Nickel-Basis-Legierung nach den Ansprüchen 1 und/oder 2, gekennzeichnet durch die Zusammensetzung

0,5 bis 3 Gew.% Kohlenstoff

7 bis 10 Gew.% Wolfram
30 bis 40 Gew.% Chrom
0,5 bis 1,5 Gew.% Bor
1 bis 3 Gew.% Phosphor
1 bis 3 Gew.% Silizium
2 bis 3 Gew.% Eisen
Rest Nickel.

## Claims

1. A nickel-base alloy which is resistant to corrosion, abrasion, erosion, cavitation and temperature cycles and possesses a high high-temperature strength corresponding to DE-AI-2639325, consisting of

0.5 to 5% by weight Carbon
2 to 15% by weight Tungsten
25 to 55% weight Chromium
0.5 to 3.5% by weight Boron
1 to 5% by weight Silicon
1 to 5% by weight Iron
balance Nickel

with the following boundary conditions:

a) percent by weigth C = percent by weigth $C_1$ + percent by weigth $C_2$ + 0,2;

b) percent by weight W = 36 × percent by weigth $C_1$;

c) percent by weight Cr ≥ 17 + 19 × percent by weight $C_2$ − 4 × percent by weight C

modified by 0.5 to 4.5% by weight Phosphorus refered to the amount of all alloying elements

Where:

percent by weigth $C_1$ = carbon content required to form carbides with refractory metals (tungsten, molybdenum)

percent by weigth $C_2$ = carbon content required to form chromium carbide

0.2 = a constant which is equivalent to the solubility limit of C in the nickel-chromium solid solution.

2. A nickel-base alloy according to claim 1 characterized in that

percent by weight Cr ≥ 25 +9 × percent by weight $C_2$ − 4 × percent by weight C.

3. A nickel-base alloy according to claim 1 and/or claim 2, characterized in that it has the following composition

0.5 to 3% by weight Carbon
7 to 10% by weight Tungsten
30 to 40% weight Chromium
0.5 to 1.5% by weight Boron
1 to 3% by weight Phosphorus
1 to 3% by weight Silicon
2 to 3% by weight Iron
balance Nickel

## Revendications

1. Alliage à base de nickel résistant à la corrosion intercristalline, à l'abrasion, à l'érosion, à la cavitation, à la variation de température cyclique et ayant une dureté à chaud élevée, suivant la demande de brevet publiée en République Fédérale d'Allemagne sous le No. 2 639 325 constitué de:

0,5 à 5% en poids de carbone
2 à 15% en poids de tungstène
25 à 55% en poids de chrome
0,5 à 3,5% en poids de bore
1 à 5% en poids de silicium
1 à 5% en poids de fer
le reste étant du nickel
les conditions limites suivantes étant satisfaies:

Pourcentage en poids de carbone = pourcentage en poids de $C_1$ + pourcentage en poids de $C_2$ + 0,2

Pourcentage en poids de W = 36 × pourcentage en poids de $C_1$.

Pourcentage en poids de chrome $\geq$ 17 + 9 × pourcentage en poids de $C_2$ − 4 × pourcentage en poids de C

caractérisé par 0,5 à 4,5% en poids de phosphore; le pourcentage en poids de $C_1$ représentant la proportion de carbone qui est nécessaire pour la formation de carbure avec les métaux réfractaires (tungstène, molybdène),

le pourcentage en poids de $C_2$ représentant la proportion de carbone qui est nécessaire pour la formation de carbure de chrome,

le facteur 0,2 représentant l'équivalent de la limite de solubilité de C dans la solution solide nickel-chrome.

2. Alliage à base de nickel suivant la revendication 1, caractérisé en ce que la relation suivante est réalisée:

Pourcentage en poids de chrome $\geq$ à 25 + 9 × pourcentage en poids de $C_2$ − 4 × pourcentage en poids de C.

3. Alliage à base de nickel suivant la revendication 1 et/ou 2, caractérisé par la composition suivante:

0,5 à 3% en poids de carbone
7 à 10% en poids de tungstène
30 à 40% en poids de chrome
0,5 à 1,5% en poids de bore
1 à 3% en poids de phosphore
1 à 3% en poids de silicium
2 à 3% en poids de fer
le reste étant du nickel.